# EUROPEAN PATENT APPLICATION

(11) **EP 4 329 220 A1**
(43) Date of publication of application: **28.02.2024**
(21) Application number: 21937468.3
(22) Date of filing: 09.06.2021
(51) Int. Cl.: H04K 3/00

(54) **METHOD AND APPARATUS FOR CONTROLLING SYSTEM TO TRANSMIT SIGNAL, AND STORAGE MEDIUM AND ELECTRONIC APPARATUS**

(30) Priority: 19.04.2021 CN 202110421171
(71) Applicant: Zhejiang Sunwave Communications Technology Co., Ltd, Hangzhou, Zhejiang 310053 (CN)
(72) Inventor: CAO, Yongfu, Hangzhou, Zhejiang 310053 (CN); YANG, Jianfeng, Hangzhou, Zhejiang 310053 (CN); YUAN, Yongchao, Hangzhou, Zhejiang 310053 (CN)
(74) Representative: V.O.
(86) International application number: PCT/CN2021/099214
(87) International publication number: WO 2022/222243

(57) **Abstract**

A method and an apparatus for controlling signal transmission of a system, and a storage medium and an electronic apparatus. The method includes: determining one or more signal receiving time periods in which a shielding system performs signal reception (S202); and controlling a self-use communication system to cut off signal transmission in the one or more signal receiving time periods (S204). The problem that a self-use private mobile communication base station is unable to perform signal transmission due to the shielding or interference of the shielding system on the self-use private mobile communication base station is solved.

## Description

### Technical Field

The present disclosure relates to the field of communications, and in particular, to a method and an apparatus for controlling signal transmission of a system, and a storage medium and an electronic apparatus.

### Background

A signal shielding system can shield base station signals for mobile communication mainly for various places where mobile phones are prohibited to be used, such as examination halls, schools, courts, and public security. The actual use of this method is to perform one-time shielding of a whole frequency band according to a frequency band of mobile communication to shield a base station signal of the mobile communication. The actual use of this method is to perform one-time shielding of a whole frequency band (a frequency band of a 3rd Generation Partnership Project (3GPP) specification, or a frequency band corresponding to a frequency width opened by this country) according to a frequency bandwidth of the mobile communication. Thus, it is contradictory to deploy a self-use private mobile communication base station in the same frequency band because the whole frequency band is shielded. If some frequencies are not required to be shielded, a filter is needed to isolate, so that a shielding system does not shield the frequency used by the private mobile communication base station relying on the filtering of the filter. For filtering technology, requirements on the frequency bandwidth are also increased due to the need of a guard band. For engineering installation, this method requires a certain distance between a receiving antenna of a shielding system and a downlink transmitting antenna of the self-use communication system to achieve enough isolation loss of the self-use communication and prevent the shielding system from being saturated and blocked by signals of the self-use communication system, which increases the cost of use and the difficulty in engineering design and construction. For the current technology, the implementation cost is high and the engineering is not easy to implement.

For the related technology, at present, there is no effective solution for the problem that the self-use private mobile communication base station is unable to perform signal transmission due to the shielding or interference of the shielding system on the self-use private mobile communication base station.

### Summary

Embodiments of the present disclosure provide a method and an apparatus for controlling signal transmission of a system, and a storage medium and an electronic apparatus to solve the problem in a related technology that a self-use private mobile communication base station is unable to perform signal transmission due to the shielding of the shielding system on the self-use private mobile communication base station.

According to one embodiment of the present disclosure, a method for controlling a system to perform signal transmission provided, which includes: one or more signal receiving time periods in which a shielding system performs signal reception is determined; and a self-use communication system is controlled to cut off signal transmission in the one or more signal receiving time periods.

Optionally, the method includes: a signal receiving time period in which the shielding system performs the signal reception in each frequency band is determined in a case that the shielding system performs the signal reception in a plurality of frequency bands,; and the self-use communication system is controlled to cut off the signal transmission of a corresponding frequency band in each signal receiving time period.

Optionally, the operation that the self-use communication system is controlled to cut off the signal transmission in the one or more signal receiving time periods includes: a time synchronization signal is received; and the self-use communication system is controlled, according to the time synchronization signal, to cut off the signal transmission in the one or more signal receiving time periods.

Optionally, the method includes: in a case that a first frequency band in which the time synchronization signal is received is the same as a second frequency band in which the shielding system performs the signal reception, a start time of receiving the time synchronization signal is the time when the shielding system starts performing the signal reception" and an end time of receiving the time synchronization signal is the time when the shielding system stops performing the signal reception are determined; and the self-use communication system is controlled to cut off the signal transmission in the signal receiving time period represented by the start time and the end time.

Optionally, the method includes: a time difference between the first frequency band and the second frequency band is determined in a case that a first frequency band in which the time synchronization signal is received is different from a second frequency band in which the shielding system performs the signal reception; the signal receiving time period in which the shielding system performs the signal reception is determined according to the time difference between the first frequency band and the second frequency band; and the self-use communication system is controlled to cut off the signal transmission in the signal receiving time period.

Optionally, the method includes: a first receiving time when the shielding system receives a first frame data in a previous cycle and a second receiving time when the shielding system receives a second frame data in the previous cycle are determined, herein the first frame data is the first frame data that the shielding system starts receiving and the second frame data is a last frame data that the shielding system receives; and a signal receiving time period in which the shielding system performs the signal reception in a current cycle is determined according to the first receiving time, the second receiving time, and the cycle in which the shielding system performs the signal reception.

Optionally, the method further includes: downlink transmission data packaged in the self-use communication system in the signal receiving time period is determined; and the downlink transmission data is cleared, or the downlink transmission data is transmitted after a predetermined time.

According to another embodiment of the present disclosure, an apparatus for controlling signal transmission of a system is provided, which includes: a determination module, configured to determine one or more signal receiving time periods in which a shielding system performs signal reception; and a control module, configured to control a self-use communication system to cut off signal transmission in the one or more signal receiving time periods.

According to still another embodiment of the present disclosure, a storage medium is further provided. The storage medium stores a computer program. The computer program is configured to perform the steps in any one of the method embodiments when running.

According to yet another embodiment of the present disclosure, an electronic apparatus is further provided. The electronic apparatus includes a memory and a processor. The memory stores a computer program, and the processor is configured to run the computer program to perform the steps in any one of the method embodiments.

Through the present disclosure, the signal receiving time period in which the shielding system performs the signal reception is determined; and the self-use communication system is controlled to cut off signal transmission in the signal receiving time period. Thus, the shielding system cannot receive the transmitted signal of the self-use communication system, so the shielding system will not transmit a shielding system to the self-use communication system, and the problem of the shielding or interference of the shielding system on the self-use communication system is solved.

### Brief Description of the Drawings

The accompanying drawings described herein are used to provide a further understanding of the present disclosure, and constitute a part of the present application, and the exemplary embodiments of the present disclosure and the description thereof are used to explain the present disclosure, but do not constitute improper limitations to the present disclosure. In the accompanying drawings:
Fig. 1 is a block diagram of a hardware structure of a mobile terminal for a method for controlling signal transmission of a system according to an embodiment of the present disclosure.
Fig. 2 is a flowchart of a method for controlling signal transmission of a system according to an embodiment of the present disclosure.
Fig. 3 is a schematic diagram of a shared digital optical fiber distribution system of a shielding detection system and a self-use communication system according to an embodiment of the present disclosure.
Fig. 4 is a schematic diagram of a digital optical fiber distribution system of a shielding detection system according to an embodiment of the present disclosure.
Fig. 5 is a schematic diagram of a digital optical fiber distribution system of a self-use communication system according to an embodiment of the present disclosure.
Fig. 6 is a schematic diagram of a transmission on/off timing alignment diagram of a self-use communication system and a store-and-forward shielding system according to an optional embodiment of the present disclosure.
Fig. 7 is a structural block diagram of an apparatus for controlling signal transmission of a system according to an embodiment of the present disclosure.

### Detailed Description of the Embodiments

The present disclosure will be described in detail below with reference to the drawings in conjunction with the embodiments. It is to be noted that embodiments in the present application and features in the embodiments may be combined without a conflict.

It is to be noted that, the terms "first", "second", and the like in the specification, claims, and the above drawings in the embodiments of the present disclosure are used for distinguishing similar objects instead of describing a specific order or sequence.

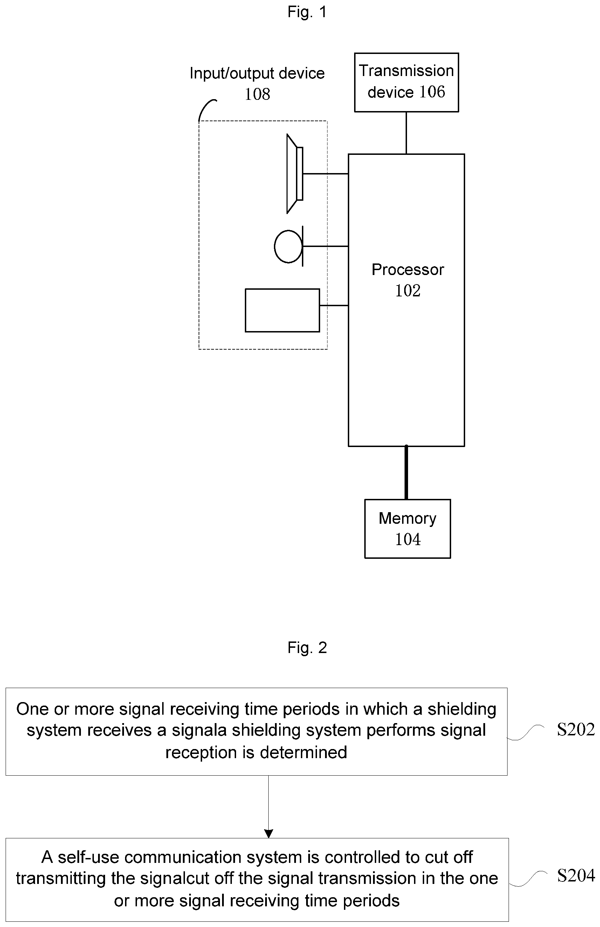

The method embodiment provided by Embodiment 1 of the present application may be performed in a mobile terminal, a computer terminal, or a similar computing apparatus. Taking running in the mobile terminal as an example, Fig. 1 is a block diagram of a hardware structure of a mobile terminal for a method for controlling signal transmission of a system according to the embodiment of the present disclosure. As shown in Fig. 1, the mobile terminal 10 may include one or more (only one shown in Fig. 1) processors 102 (the processors 102 may include, but are not limited to, processing apparatuses such as a Microprocessor Control Unit (MCU) or a Field Programmable Gate Array (FPGA)) and a memory 104 for storing data. Optionally, the mobile terminal may also include a transmission device 106 for a communication function and an input/output device 108. Those of ordinary skill in the art may understand that the structure shown in Fig. 1 is only illustrative and does not limit the structure of the above mobile terminal. For example, the mobile terminal 10 may also include more or fewer components than those shown in Fig. 1, or has a different configuration from that shown in Fig. 1.

The memory 104 may be configured to store a computer program, for example, a software program of application software and modules, such as a computer program corresponding to a method for controlling signal transmission of a system in the embodiment of the present disclosure. The processor 102 runs the computer program stored in the memory 104 to perform various functional applications and data processing, that is, to implement the above method. The memory 104 may include a high speed random access memory or a non-volatile memory, for example, one or more magnetic storage apparatuses, flash memories, or other non-volatile solid state memories. In some embodiments, the memory 104 may further include memories remotely located relative to the processor 102. These remote memories may be connected to the mobile terminal 10 through a network. Examples of the above network include, but are not limited to, the Internet, the Intranet, a local area network, a mobile communication network, and combinations thereof.

The transmission device 106 is configured to receive or transmit data through a network. Specific examples of the above network may include a wireless network provided by a communication provider of the mobile terminal 10. In one example, the transmission device 106 includes a Network Interface Controller (NIC for short) that can be connected to other network devices through a base station to communicate with the Internet. In one example, the transmission device 106 may be a Radio Frequency (RF for short) module, which is configured to communicate with the Internet in a wireless manner.

A method for controlling signal transmission of a system running in the above mobile terminal is provided in the present embodiment. Fig. 2 is a flowchart of a method for controlling signal transmission of a system according to an embodiment of the present disclosure. As shown in Fig. 2, the flow includes the following steps.

At S202, one or more signal receiving time periods in which a shielding system performs signal reception is determined.

At S204, a self-use communication system is controlled to cut off signal transmission in the one or more signal receiving time periods.

Through the above steps, the one or more signal receiving time periods in which the shielding system performs signal reception is determined; and the self-use communication system is controlled to cut off signal transmission in the one or more signal receiving time periods. Thus, the shielding system cannot receive the transmitted signal of the self-use communication system, so the shielding system will not transmit a shielding system to the self-use communication system, and the problem of the shielding or interference of the shielding system on the self-use communication system is solved.

Optionally, an execution subject of the above steps may be a terminal or the like, but is not limited thereto.

Optionally, the method includes: a signal receiving time period in which the shielding system performs the signal reception in each frequency band is determined in a case that the shielding system performs the signal reception in a plurality of frequency bands; and the self-use communication system is controlled to cut off the signal transmission of a corresponding frequency band in each signal receiving time period.

As an optional implementation, the shielding system may shield the signal in a certain frequency band, or may shield the signals in a plurality of frequency bands. Assuming that signals of two frequency bands, that is, a frequency band 1 and a frequency band 2, are shielded, if the self-use communication system receives and transmits the signals in the frequency band 1 and the frequency band 2, then the shielding system will shield the received and transmitted signals of the self-use communication system. In the present embodiment, a time period in which the shielding system performs the signal reception in the frequency band 1 may be determined, and the self-use communication system is cut off the signal transmission in the frequency band 1 in the time period. A time period in which the shielding system performs the signal reception in the frequency band 2 may be determined, and the self-use communication system is cut off the signal transmission in the frequency band 2 in the time period. According to the present embodiment, downlink signals in corresponding frequency bands of the self-use communication system are cut off synchronously at the times when the shielding system performs the signal receptions transmitted by a base station (a public network) in different frequency bands. Thus, the shielding system cannot receive the transmitted signal in the frequency band of the self-use communication system, so the shielding system cannot transmit a shielding signal to the self-use communication system (according to a store-and-forward principle, there is no signal of the self-use communication system in a forwarding signal because a self-use communication system signal is not received). The problem of shielding or interference of the shielding system on the self-use communication system is solved. A downlink signal of the self-use communication system does not need to be separated by a filtering technology. An isolation requirement between a downlink transmitting antenna and a shielded transmitting antenna of the self-use communication system is also avoided, and the downlink transmitting antenna and the shielded transmitting antenna can even share a transmitting chain, including a power amplifier and an antenna.

Optionally, the operation that the self-use communication system is controlled to cut off the signal transmission in the one or more signal receiving time periods includes: a time synchronization signal is received; and the self-use communication system is controlled, according to the time synchronization signal, to cut off the signal transmission in the one or more signal receiving time periods.

As an optional implementation, a synchronization corresponding method such as wired, wireless, or a third-party reference clock, for example, a Global Positioning System (GPS), or a synchronized or the same base station clock. A corresponding technical problem, including an engineering supporting technical problem is solved. An automatic measurement and compensation technology for a transmission delay of a transmission delay in a synchronizing system is used for ensuring that the downlink signal of the self-use communication system is cut off in the time period in which the shielding system receives the base station signal. The time synchronization signal may be transmitted through a third-party device, so as to ensure that the time when the shielding system performs the signal reception is kept synchronous with the time when the self-use communication system cuts off transmitting the signal. A relatively convenient synchronization method is to synchronize to base station transmission received by a shield (a frame with an appointed frame number). There are slight differences among synchronizations of a plurality of shields due to different distances from a base station, and a protection time needs to be set to prevent receiving and transmitting collisions among a plurality of shields. The method is also used for the synchronization of the self-use communication system. For the use of an external synchronization method, the transmission delay of this method needs to be considered, the transmission delay needs to be offset, and an on-off conversion protection time is needed to ensure that there is no receiving and transmitting collisions.

Optionally, the method includes: in a case that a first frequency band in which the time synchronization signal is received is the same as a second frequency band in which the shielding system performs the signal reception, a start time of receiving the time synchronization signal is the time when the shielding system starts performing the signal reception, and an end time of receiving the time synchronization signal is the time when the shielding system stops performing the signal reception are determined; and the self-use communication system is controlled to cut off the signal transmission in the signal receiving time period represented by the start time and the end time.

As an optional implementation, a frequency band (a first frequency band) in which the time synchronization signal is transmitted and a frequency band (a second frequency band) in which the shielding system performs the signal reception may be the same frequency band, or may be different frequency bands. For the same frequency band, a start time of the time synchronization signal is a time when the shielding system starts performing the signal reception, and an end time of the time synchronization signal is the time when the shielding system stops performing the signal reception. Thus, in the time synchronization signal, the self-use communication system cuts off the signal transmission .

Optionally, the method includes: a time difference between the first frequency band and the second frequency band is determined in a case that the first frequency band in which the time synchronization signal is received is different from the second frequency band in which the shielding system performs the signal reception; the signal receiving time period in which the shielding system performs the signal reception is determined according to the time difference between the first frequency band and the second frequency band; and the self-use communication system is controlled to cut off the signal transmission in the signal receiving time period.

As an optional implementation, in a case that the frequency band (the first frequency band) in which the time synchronization signal is transmitted and the frequency band (the second frequency band) in which the shielding system performs the signal reception are different frequency bands, since there is a time difference between transmitted signals in different time bands, the time difference needs to be offset, and an on-off conversion protection time is needed to ensure that there is no overlap between transmitting and receiving. Then, a signal receiving time period in which the shielding system performs the signal reception needs to be determined according to the time difference, and the self-use communication system is controlled to cut off the signal transmission in the signal receiving time period.

Optionally, the method includes: a first receiving time when the shielding system receives a first frame data in a previous cycle and a second receiving time when the shielding system receives a second frame data in the previous cycle are determined, herein the first frame data is the first frame data that the shielding system starts receiving and the second frame data is a last frame data that the shielding system receives; and a signal receiving time period in which the shielding system performs the signal reception in a current cycle is determined according to the first receiving time, the second receiving time, and the cycle in which the shielding system performs the signal reception.

As an optional implementation, it is considered that a public network base station transmits frame data periodically, and it can be specified that a certain frame (corresponding to the first frame data) is the first frame data in the signal that the shielding system starts receiving in one cycle and that is transmitted by the base station, and the other frame (corresponding to the second frame data) is the frame data in the signal that the shielding system receives again in a next cycle and that is transmitted by the base station. A duration of the shielding system in one cycle may be determined through a receiving time interval of the two frames of data, a time period that the shielding system performs the signal reception in the next cycle may be determined in combination with the cycle, and the self-use communication system is controlled to cut off the transmission of downlink transmission data in the time period.

Optionally, the method further includes: the downlink transmission data packaged in the self-use communication system in the signal receiving time period is determined; and the downlink transmission data is cleared, or the downlink transmission data is transmitted after a predetermined time.

As an optional implementation, the loss caused by cutting off is reduced or made up; the self-use communication system is matched with a switch to cut off downlink transmission corresponding to the receiving time period (a time of a frame) of the shielding system, downlink modulation data information of this frame is further cleared when a base band of this frame is processed, and there may be no modulation data. Relevant data to be transmitted is delayed or canceled. Thus, the loss of losing caused by the fact that a mobile terminal (for example, a mobile phone) used by a corresponding user cannot receive the frame data (corresponding to null data) because of cut off of the downlink transmission is avoided, and a process for requesting retransmission because the frame data cannot be received is reduced (there is no data, so it doesn't manner if the data is not received). Or, the transmission of the downlink transmission data may be postponed, and a postponing time may be determined according to an actual situation, for example, may be a next cycle. Communication loss of a self-use base station caused by cutting off a corresponding frame is reduced, and interference processing methods for a detection base station of a detection system carried by the shielding system and for the shielding system are the same.

As an optional implementation, if the times of different frequency bands are not aligned, the frequency bands may be separately aligned according to frames of the present frequency band. If cross-band synchronization is used (shields are separately synchronized by using different frequency band base stations, and it needs to be confirmed that alignment needs to accurately obtain time difference data of the synchronization between frequency bands, and the time difference data is restored after synchronization). For an actual use place, according to a scenario size, functions, and requirements of a shielding and self-use communication system, the following solutions may be flexibly designed and used: a plurality of sets of shields + a plurality of sets of self-use base stations, or a mixed system of a plurality of sets of digital optical fiber distribution systems (a synchronization manner: may be wired connection, wireless connection, third-party synchronization, or the like). The system may run synchronously through a synchronization signal of a synchronization technology, and the detection base station and the shielding system may also coexist by using this method.

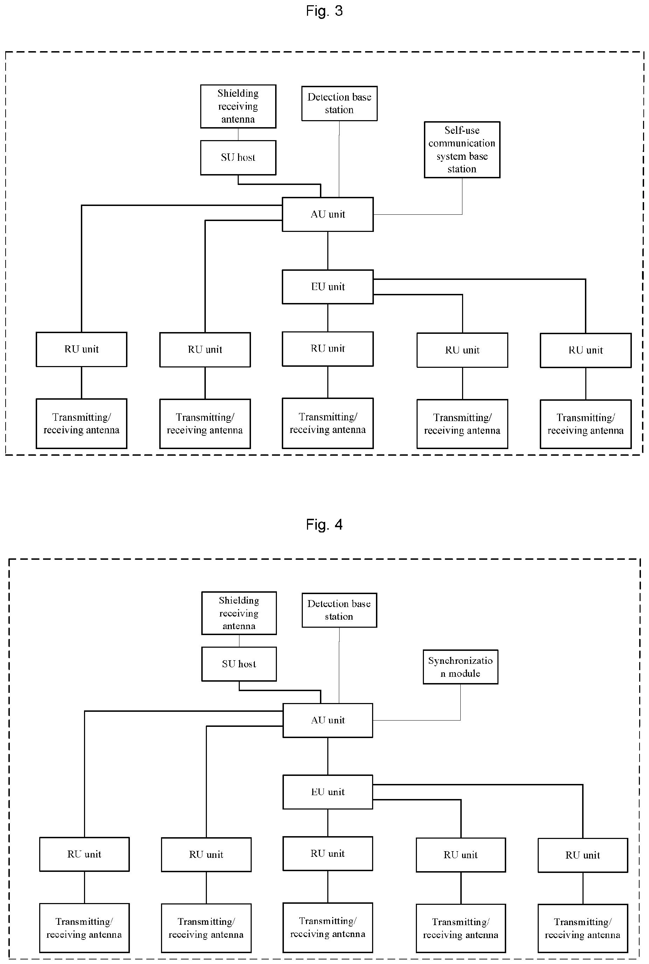

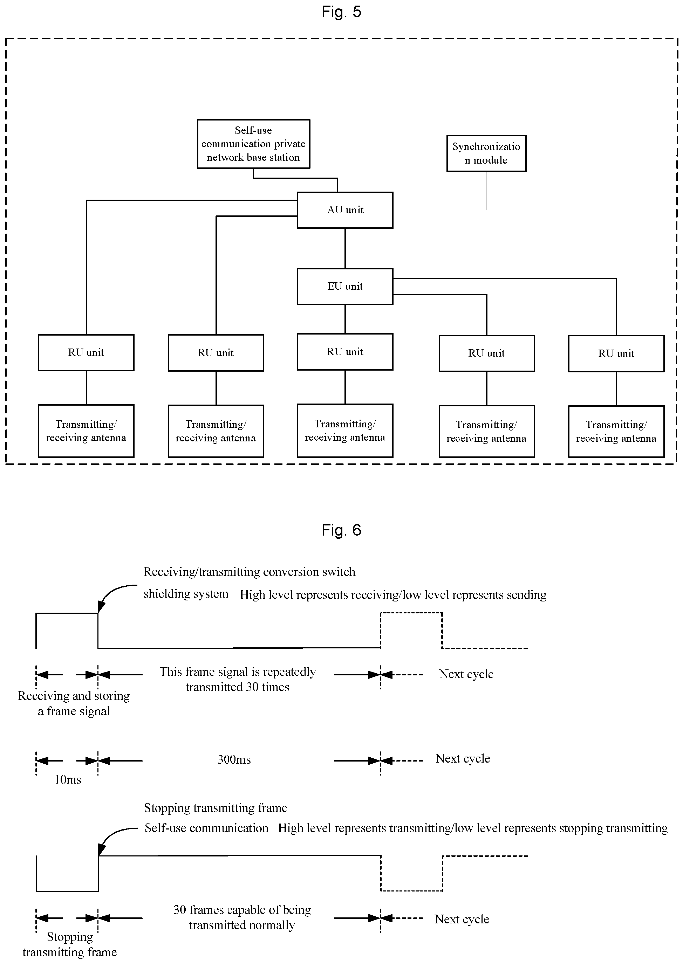

As an optional implementation manner, in a shielding and self-use communication base station integrated digital optical fiber distributed control system, Fig. 3 is a schematic diagram of a shared digital optical fiber distribution system of a shielding detection system and a self-use communication system according to an embodiment of the present disclosure. The system combines shielding, detection, and self-use communication system integrated digital optical fiber distributed control system, and an engineering design and engineering construction are arranged according to user requirements to achieve a set of practical system required by a user. Fig. 4 is a schematic diagram of a digital optical fiber distribution system of a shielding detection system according to an embodiment of the present disclosure. Fig. 5 is a schematic diagram of a digital optical fiber distribution system of a self-use communication system according to an embodiment of the present disclosure. In the present embodiment, an independent shielding and detection system and an independent self-use communication system are combined according to user scenarios and user requirements, the above two set of systems are combined through the engineering design, and then a complete set of practical system required by the user is achieved through engineering construction. For a large complex use scenario, it may be a plurality of sets of single machines or includes a digital optical fiber distribution system (the combination of the above plurality sets of systems includes integrated or separate ones). In the drawings, an SU host is a main control signal unit, an AU unit is a fusion access unit, an EU unit is an extension unit, and an RU unit is a remote unit. Fig. 6 is a schematic diagram of a transmission on/off timing alignment diagram of a self-use communication system and a store-and-forward shielding system according to an optional embodiment of the present disclosure. High and low levels represent signal transmission and stopping. For the shielding system, a high level represents receiving, and a low level represents transmitting. For the self-use communication system, a high level represents transmitting, and a low level represents stopping transmitting.

Through the description of the above implementations, those skilled in the art can clearly understand that the method of the above embodiments may be implemented by means of software and a necessary general hardware platform, and of course, may also be implemented through hardware, but in many cases, the former one is a better implementation. Based on such understanding, the technical solution of the present disclosure essentially, or a part contributing to the conventional art, may be embodied in the form of a software product stored in a storage medium (such as a Read Only Memory/Random Access Memory (ROM/RAM), a magnetic disc and a compact disc), including a number of instructions, so that a terminal device (which may be a mobile phone, a computer, a server, a network device, or the like) performs the methods described in various embodiments of the present disclosure.

In the present embodiment, an apparatus for controlling signal transmission of a system is also provided. The apparatus is configured to implement the above embodiments and preferred implementations, and those have not been described and will not be elaborated. As used below, the term "module" may implement a combination of software and/or hardware with a predetermined function. Although the apparatus described in the following embodiments is preferably implemented in software, hardware or a combination of software and hardware may also possible and be contemplated.

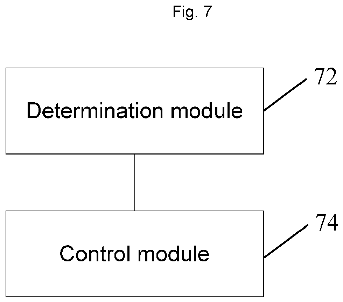

Fig. 7 is a structural block diagram of an apparatus for controlling signal transmission of a system according to an embodiment of the present disclosure. As shown in Fig. 7, the apparatus includes: a determination module 72, configured to determine one or more signal receiving time periods in which a shielding system performs signal reception; and a control module 74, configured to control a self-use communication system to cut off the signal transmission in the one or more signal receiving time periods.

Optionally, the above apparatus is configured to determine a signal receiving time period in which the shielding system performs the signal reception in each frequency band in a case that the shielding system performs the signal reception in a plurality of frequency bands, and control the self-use communication system to cut off the signal transmission of a corresponding frequency band in each signal receiving time period.

Optionally, the above apparatus is configured to control the self-use communication system to cut off the signal transmission in the one or more signal receiving time periods in the following manner: receiving a time synchronization signal; and controlling, according to the time synchronization signal, the self-use communication system to cut off the signal transmission in the one or more signal receiving time periods.

Optionally, the above apparatus is also configured to: in a case that a first frequency band in which the time synchronization signal is received is the same as a second frequency band in which the shielding system performs the signal reception, determine that a start time of receiving the time synchronization signal is the time when the shielding system starts performing the signal reception, and an end time of receiving the time synchronization signal is the time when the shielding system stops performing the signal reception; and control the self-use communication system to cut off the signal transmission in the signal receiving time period represented by the start time and the end time.

Optionally, the above apparatus is also configured to: determine a time difference between a first frequency band and a second frequency band in a case that the first frequency band in which the time synchronization signal is received is different from the second frequency band in which the shielding system performs the signal reception; determine, according to the time difference between the first frequency band and the second frequency band, the signal receiving time period in which the shielding system performs the signal reception; and control the self-use communication system to cut off the signal transmission in the signal receiving time period.

Optionally, the above apparatus is also configured to: determine a first receiving time when the shielding system receives a first frame data in a previous cycle and a second receiving time when the shielding system receives a second frame data in the previous cycle, herein the first frame data is the first frame data that the shielding system starts receiving and the second frame data is a last frame data that the shielding system receives; and determine a signal receiving time period in which the shielding system performs the signal reception in a current cycle according to the first receiving time, the second receiving time, and the cycle in which the shielding system performs the signal reception.

Optionally, the above apparatus is also configured to: determine downlink transmission data packaged in the self-use communication system in the signal receiving time period; and clear the downlink transmission data, or transmit the downlink transmission data after a predetermined time.

It is to be noted that each of the modules above may be implemented by software or hardware. For the latter one, it may be implemented by, but not limited to, the following manners: the above modules are all located in the same processor; or, the above modules are respectively located in different processors in any combination form.

The embodiment of the present disclosure further provides a storage medium. The storage medium stores a computer program. The computer program is configured to perform the steps in any one of the above method embodiments when running.

Optionally, in the present embodiment, the above storage medium may be configured to store a computer program for performing the following steps.

At S1, one or more signal receiving time periods in which a shielding system performs signal reception is determined.

S2, a self-use communication system is controlled to cut off the signal transmission in the one or more signal receiving time periods.

Optionally, in the present embodiment, the above storage medium may include, but is not limited to, various media capable of storing a computer program, such as a USB flash disc, a ROM, a RAM, a mobile hard disc, a magnetic disc or a compact disc.

An embodiment of the present disclosure further provides an electronic apparatus, including a memory and a processor. The memory stores a computer program, and the processor is configured to run the computer program to perform the steps in any one of the above method embodiments.

Optionally, the above electronic apparatus may further include an transmission device and an input/output device. The transmission device is connected to the above processor. The input/output device is connected to the above processor.

Optionally, in the present embodiment, the above processor may be configured to perform the following steps through a computer program.

At S1, one or more signal receiving time periods in which a shielding system performs signal reception is determined.

S2, a self-use communication system is controlled to cut off the signal transmission in the one or more signal receiving time periods.

Optionally, a specific example in the present embodiment may refer to the examples described in the above embodiments and alternative implementation manners, which is not elaborated herein in the present embodiment.

It is apparent that a person skilled in the art shall understand that all of the above modules or steps in the present disclosure may be implemented by using a general calculation apparatus, may be centralized on a single calculation apparatus or may be distributed on a network composed of multiple calculation apparatuses. Optionally, they may be implemented by using executable program codes of the calculation apparatuses. Thus, they may be stored in a storage device and executed by the calculation apparatuses, the shown or described steps may be executed in a sequence different from this sequence under certain conditions, or they are manufactured into each integrated circuit module respectively, or multiple modules or steps therein are manufactured into a single integrated circuit module. Thus, the present disclosure is not limited to the combination of any specific hardware and software.

The above is only the preferred embodiments of the present disclosure, not intended to limit the present disclosure. As will occur to those skilled in the art, the present disclosure is susceptible to various modifications and changes. Any modifications, equivalent replacements, improvements and the like made within the principle of the present disclosure shall fall within the scope of protection of the present disclosure.

## Claims

1. A method for controlling signal transmission of a system, comprising:
determining one or more signal receiving time periods in which a shielding system performs signal reception; and
controlling a self-use communication system to cut off signal transmission in the one or more signal receiving time periods.

2. The method according to claim 1, comprising:
in a case that the shielding system performs the signal reception in a plurality of frequency bands, determining a signal receiving time period in which the shielding system performs the signal reception in each frequency band; and
controlling the self-use communication system to cut off the signal transmission of a corresponding frequency band in each signal receiving time period.

3. The method according to claim 1, wherein controlling the self-use communication system to cut off the signal transmission in the one or more signal receiving time periods comprises:
receiving a time synchronization signal; and
controlling, according to the time synchronization signal, the self-use communication system to cut off the signal transmission in the one or more signal receiving time periods.

4. The method according to claim 3, comprising:
in a case that a first frequency band in which the time synchronization signal is received is the same as a second frequency band in which the shielding system performs the signal reception, determining that a start time of receiving the time synchronization signal is the time when the shielding system starts performing the signal reception, and an end time of receiving the time synchronization signal is the time when the shielding system stops performing the signal reception; and
controlling the self-use communication system to cut off the signal transmission in the signal receiving time period represented by the start time and the end time.

5. The method according to claim 3, comprising:
in a case that a first frequency band in which the time synchronization signal is received is different from a second frequency band in which the shielding system performs the signal reception, determining a time difference between the first frequency band and the second frequency band;
determining the signal receiving time period in which the shielding system performs the signal reception according to the time difference between the first frequency band and the second frequency band; and
controlling the self-use communication system to cut off the signal transmission in the signal receiving time period.

6. The method according to claim 5, comprising:
determining a first receiving time when the shielding system receives a first frame data in a previous cycle and a second receiving time when the shielding system receives a second frame data in the previous cycle, the first frame data being the first frame data that the shielding system starts receiving and the second frame data being a last frame data that the shielding system receives; and
determining a signal receiving time period in which the shielding system performs the signal reception in a current cycle according to the first receiving time, the second receiving time, and the cycle in which the shielding system performs the signal reception.

7. The method according to claim 5, further comprising:
determining downlink transmission data packaged in the self-use communication system in the signal receiving time period; and
clearing the downlink transmission data, or transmitting the downlink transmission data after a predetermined time.

8. An apparatus for controlling signal transmission of a system, comprising:
a determination module, configured to determine one or more signal receiving time periods in which a shielding system performs signal reception; and
a control module, configured to control a self-use communication system to cut off signal transmission in the one or more signal receiving time periods.

9. A storage medium, the storage medium storing a computer program, wherein the computer program is capable of performing the method according to any one of claims 1 to 7 when run by a terminal device or a computer.

10. An electronic apparatus, comprising a memory and a processor, wherein the memory stores a computer program, and the processor is configured to run the computer program to implement the method according to any one of claims 1 to 7.
